# EUROPÄISCHE PATENTSCHRIFT

(11) **EP 2 082 561 B1**
(45) Veröffentlichungstag und Bekanntmachung des Hinweises auf die Patenterteilung: **17.09.2014**
(21) Anmeldenummer: 07819739.9
(22) Anmeldetag: 10.11.2007
(51) Int. Cl.: H04M 1/2745, H04M 1/725

(54) **VERFAHREN ZUR ÜBERTRAGUNG VON TELEFONBUCHDATEN VON EINEM MOBILTELEFON ZU EINEM EXTERNEN GERÄT UND EXTERNES GERÄT**
METHOD FOR TRANSMITTING TELEPHONE BOOK DATA FROM A MOBILE TELEPHONE TO AN EXTERNAL DEVICE, AND EXTERNAL DEVICE
PROCÉDÉ POUR LE TRANSFERT DE DONNÉES D'ANNUAIRE TÉLÉPHONIQUE D'UN TÉLÉPHONE MOBILE VERS UN APPAREIL EXTERNE ET APPAREIL EXTERNE

(30) Priorität: 24.11.2006 DE 102006055501
(43) Veröffentlichungstag der Anmeldung: 29.07.2009
(73) Patentinhaber: Bayerische Motoren Werke Aktiengesellschaft, 80809 München (DE)
(72) Erfinder: SYKORA, Thomas, 81247 München (DE); NITSCHE, Axel, 80336 München (DE)
(74) Vertreter: Mayer-Martin, Christian
(86) Internationale Anmeldenummer: PCT/EP2007/009747
(87) Internationale Veröffentlichungsnummer: WO 2008/061646

(56) Entgegenhaltungen:
- WO-A-2006/074345
- US-A1- 2006 079 182
- BLUETOOTH SIG PRESS RELEASES, [Online] 13. Februar 2006 (2006-02-13), XP002469141 Gefunden im Internet: URL:http://bluetooth.com/Bluetooth/Press/S IG/Test_1.htm> [gefunden am 2008-02-12]
- "Bluetooth SIG launches new Profiles"[Online] 14. Februar 2006 (2006-02-14), XP002469142 Gefunden im Internet: URL:http://www.autoindustry.co.uk/news/14- 02-06_6> [gefunden am 2008-02-11]
- OLIVER ZECHLIN: "Nutzung des SIM Access Profiles zur Uebertragung des Mobilfunkadressbuches an ein Bluetooth-CarKit" IP.COM JOURNAL, IP.COM INC., WEST HENRIETTA, NY, US, 25. Februar 2005 (2005-02-25), XP013022983 ISSN: 1533-0001
- "Hands-free rofile 1.5"[Online] 25. November 2005 (2005-11-25), Seiten 1-93, XP002469143 Gefunden im Internet: URL:http://www.bluetooth.com/NR/rdonlyres/ 7EC6A8DC-D570-4FA1-A970-275223A8A72B/1762/ HFP15_SPEC_V10r01.pdf> [gefunden am 2008-02-14]

## Beschreibung

Die Erfindung betrifft ein Verfahren zur Übertragung von Telefonbuchdaten von einem Mobiltelefon zu einem externen Gerät und ein entsprechend eingerichtetes externes Gerät, insbesondere eine Kraftfahrzeugfreisprecheinrichtung oder ein Steuergerät in einem Kraftfahrzeug.

Die weiter rasante Verbreitung der Mobilfunktechnik führte in den letzten Jahren unter anderem zur Entwicklung und Bereitstellung von Kraftfahrzeugfreisprecheinrichtungen, welche mit Mobiltelefonen zusammenwirken. Als besonders fortgeschritten gelten dabei Kraftfahrzeugfreisprecheinrichtungen, welche schnurlos, insbesondere basierend auf dem so genannten Bluetooth-Standard, mit einem Mobiltelefon, das sich insbesondere im Fahrzeug oder in der Nähe des Fahrzeuges befindet, zusammenwirken oder kommunizieren.

Dazu ist es bekannt, dass eine Kraftfahrzeugfreisprecheinrichtung automatisch eine Bluetooth-Verbindung zu einem der Kraftfahrzeugfreisprecheinrichtung zugeordneten Mobiltelefon aufbaut oder umgekehrt, sobald sich das Mobiltelefon in der Reichweite der Kraftfahrzeugfreisprecheinrichtung befindet oder umgekehrt. Über die Bluetooth-Verbindung können dann das Mobiltelefon und die Kraftfahrzeugfreisprecheinrichtung Daten austauschen. Durch den Austausch von Sprachdaten kann die Sprachkommunikation basierend auf der Kraftfahrzeugfreisprecheinrichtung und dem Mobiltelefon über ein Mobilfunksystem realisiert werden. Durch den Austausch von Steuerdaten kann die Steuerung des Mobiltelefons durch eine Benutzerschnittstelle eines Kraftfahrzeuges realisiert werden.

Aus der WO 2006074345 A1 ist bereits eine besondere Art des Zugriffs auf elektronische Telefonbücher von Mobiltelefonen durch eine Kraftfahrzeugfreisprecheinrichtung und deren nachfolgende Verarbeitung bekannt. Bei einem solchen Zugriff können noch Kompatibilitäts-Probleme auftreten, die zumindest teilweise mit der kürzlich von der Bluetooth Special Interest Group (SIG) bereit gestellten Schnittstellenbeschreibung, dem so genannten Phonebook Access Profile PBAP, beseitigt werden können . Allerdings muss bei einer Implementierung des PBAP in Kraftfahrzeugfreisprecheinrichtungen berücksichtigt werden, dass die Kraftfahrzeugfreisprecheinrichtungen auch weiter auf elektronische Telefonbücher von Mobiltelefonen zugreifen können, die noch nicht über eine Implementierung des PBAP verfügen.

Auch aus den folgenden Dokumenten ist das Zusammenwirken zwischen Mobiltelefonen und externen Geräten basierend auf dem Bluetooth-Protokoll bekannt.:- BLUETOOTH SIG PRESS RELEASES, [Online] 13. Februar 2006 (2006-02-13), XP002469141 Gefunden im Internet:
URL:http://bluetooth.com/Bluetooth/Press/SIG/Test_1.htm> [gefunden am 2008-02-12]
"Bluetooth SIG launches new Profiles"[Online] 14. Februar 2006 (2006-02-14), XP002469142 Gefunden im Internet:
   URL:http://www.autoindustry.co.uk/news/14-02-06_6> [gefunden am 2008-02-11]

Der Erfindung liegt nun die Aufgabe zu Grunde, eine technische Lehre anzugeben, mit welcher das Zusammenwirken zwischen einem Mobiltelefon und einem externen Gerät, wie beispielsweise einer Kraftfahrzeugfreisprecheinrichtung, verbessert wird.

Diese Aufgabe wird durch die Merkmale der unabhängigen Ansprüche gelöst. Vorteilhafte Weiterbildungen der Erfindung sind den abhängigen Ansprüchen zu entnehmen. Im Rahmen der Erfindung liegen dabei auch Weiterbildungen des unabhängigen Geräteanspruchs, die den abhängigen Verfahrensansprüchen entsprechen.

Die Erfindung basiert auf folgenden Erkenntnissen:
- es existieren Mobiltelefone mit einer Bluetooth-Schnittstelle (singlechannel), die nicht in der Lage sind, über einen Bluetooth-Kommunikationskanal mehr als einen Bluetooth-Dienst zu realisieren;
- es existieren Mobiltelefone mit einer Bluetooth-Schnittstelle (multichannel), die in der Lage sind, über einen Bluetooth-Kommunikationskanal mehr als einen Bluetooth-Dienst zu realisieren;
- es existieren Mobiltelefone, mit einer Bluetooth-Schnittstelle, auf deren Telefonbuchdaten basierend auf einer ersten Zugriffsart, insbesondere einer mobiltelefontypspezifischen Zugriffsart und/oder einer AT-Kommandos einsetzenden Zugriffsart (beispielsweise sind die AT-Kommandos mobiltelefonherstellerspezifisch implementiert), zugegriffen werden kann;
- es existieren Mobiltelefone, mit einer Bluetooth-Schnittstelle, auf deren Telefonbuchdaten basierend auf einer zweiten Zugriffsart, insbesondere einer bluetoothspezifischen Zugriffsart, zugegriffen werden kann;
- es existieren Mobiltelefone, mit einer Bluetooth-Schnittstelle, auf deren Telefonbuchdaten basierend auf einer ersten Zugriffsart, insbesondere einer mobiltelefontypspezifischen Zugriffsart und/oder einer AT-Kommandos einsetzenden Zugriffsart, oder basierend auf einer zweiten Zugriffsart, insbesondere einer bluetoothspezifischen Zugriffsart, zugegriffen werden kann;
- die Realisierung der zweiten Zugriffsart basiert auf einem Bluetooth-Dienst, ist ein Bluetooth-Dienst oder erfordert einen eigenen Bluetooth-Dienst;
- die Realisierung eines Bluetooth-Telefoniedienstes basiert auf einem Bluetooth-Dienst, ist ein Bluetooth-Dienst oder erfordert einen eigenen Bluetooth-Dienst.

Unter Nutzung und Verknüpfung dieser Erkenntnisse basiert nun die Erfindung insbesondere auf dem Gedanken, einem Mobiltelefonnutzer in einem Fahrzeug mit Freisprecheinrichtung mit hoher Priorität zuverlässig und rasch das Telefonieren zu ermöglichen und mit niedrigerer Priorität einen Zugriff auf Telefonbuchdaten des Mobiltelefons mittels der Freisprecheinrichtung zu ermöglichen. Dies wird vorzugsweise dadurch erreicht, dass unabhängig von den Fähigkeiten des Mobiltelefons nach dem Aufbau eines Bluetooth-Kommunikationskanals (RF-COMM) zwischen dem Mobiltelefon und einem externen Gerät, insbesondere einer Freisprecheinrichtung, basierend auf dem Bluetooth-Kommunikationskanal (RF-COMM) als ein erster Bluetooth-Dienst ein Bluetooth-Telefoniedienst (HFP; Bluetooth Hands-Free Profile), insbesondere zur Anruf-Bedienung, eingerichtet wird. Dadurch wird gewährleistet, dass unabhängig von den Fähigkeiten des Mobiltelefons rasch und zuverlässig ein Telefonieren mit dem Mobiltelefon über ein externes Gerät, insbesondere eine Freisprecheinrichtung, möglich ist.

Um nun ebenfalls unabhängig von den Fähigkeiten des Mobiltelefons rasch und zuverlässig einen Zugriff auf Telefonbuchdaten des Mobiltelefons über ein externes Gerät, insbesondere eine Freisprecheinrichtung, zu ermöglichen, wird vorzugsweise eine Übertragung von Telefonbuchdaten von dem Mobiltelefon zu dem externen Gerät basierend auf einer von zumindest zwei vorgegebenen Zugriffsarten (PBAP, Phone Book Access Profile; ATC, AT-Kommandos) initiiert. Vorzugsweise ist dabei die erste Zugriffsart (ATC) basierend auf dem Bluetooth-Telefoniedienst (HFP) realisierbar, und die zweite Zugriffsart (PBAP) basierend auf einem zweiten Bluetooth-Dienst oder als zweiter Bluetooth-Dienst (PBAP) realisierbar. Dadurch wird gewährleistet, dass rasch und zuverlässig auf Telefonbuchdaten von verschiedenen Mobiltelefontypen zugegriffen werden kann, unabhängig davon, ob die Bluetooth-Schnittstelle des Mobiltelefontyps den Zugriff basierend auf einer ersten Zugriffsart, auf einer zweiten Zugriffsart oder auf beide Zugriffsarten zulässt oder beherrscht.

Es wird, vorzugsweise ohne zunächst die erste Zugriffsart einzusetzen, versucht, basierend auf dem Bluetooth-Kommunikationskanal (RF-COMM) einen zweiten Bluetooth-Dienst aufzubauen. Es wird eine Übertragung von Telefonbuchdaten von dem Mobiltelefon zu dem externen Gerät basierend auf einer zweiten Zugriffsart (PBAP) initiiert, wenn der Versuch, basierend auf dem Bluetooth-Kommunikationskanal (RF-COMM) einen zweiten Bluetooth-Dienst aufzubauen, erfolgreich ist, wobei die zweite Zugriffsart (PBAP) den zweiten Bluetooth-Dienst nützt oder bestimmt. Beispielsweise kann die zweite Zugriffsart (PBAP) auch wieder der zweite Bluetooth-Dienst sein, und der Versuch, basierend auf dem Bluetooth-Kommunikationskanal (RF-COMM) einen zweiten Bluetooth-Dienst aufzubauen, ein Versuch sein, basierend auf dem Bluetooth-Kommunikationskanal (RF-COMM) eine Übertragung von Telefonbuchdaten von dem Mobiltelefon zu dem externen Gerät basierend auf der zweiten Zugriffsart (PBAP) zu initiieren.

Es wird eine Übertragung von Telefonbuchdaten von dem Mobiltelefon zu dem externen Gerät basierend auf einer ersten Zugriffsart (ATC) initiiert, wenn eine Übertragung von Telefonbuchdaten von dem Mobiltelefon zu dem externen Gerät basierend auf einer zweiten Zugriffsart (PBAP) nicht erfolgreich ist. Die Übertragung von Telefonbuchdaten basierend auf einer ersten Zugriffsart (ATC) von dem Mobiltelefon zu dem externen Gerät basiert dabei vorzugsweise auf dem Bluetooth-Telefoniedienst (HFP).

Dadurch kann auch auf Telefonbuch-Daten von Mobiltelefonen zugegriffen werden, auf die nicht mittels der zweiten Zugriffsart zugegriffen werden kann.

Die genannte Aufgabe wird auch gelöst durch ein externes Gerät, insbesondere eine Kraftfahrzeugfreisprecheinrichtung oder ein Steuergerät in einem Kraftfahrzeug, mit einer Bluetooth-Übertragungseinrichtung, die zum alternativen Zugriff auf Telefonbuchdaten von einem Mobiltelefon auf eine von zumindest zwei verschiedenen vorgegebenen Zugriffsarten (PBAP, ATC) eingerichtet ist. Eine Steuereinrichtung ist derart eingerichtet, dass ein Bluetooth-Kommunikationskanal (RF-COMM) zwischen dem Mobiltelefon und dem externen Gerät aufgebaut wird, dass basierend auf dem Bluetooth-Kommunikationskanal (RF-COMM) als erster Bluetooth-Dienst ein Bluetooth-Telefoniedienst eingerichtet wird, und dass eine Übertragung von Telefonbuchdaten von dem Mobiltelefon zu dem externen Gerät basierend auf einer von zumindest zwei vorgegebenen Zugriffsarten (PBAP, ATC) initiiert wird.

Die Steuereinrichtung kann als programmgesteuerte Prozessoreinrichtung oder als anwendungsspezifische integrierte Schaltung ausgeführt sein. Die Steuereinrichtung ist insbesondere zur Steuerung wesentlicher Komponenten des externen Gerätes und zur Steuerung oder Ausführung der Schritte der im Rahmen der Erfindung liegenden Verfahren programmtechnisch entsprechend eingerichtet.

Im Folgenden wird die Erfindung anhand von Beispielen unter Bezugnahme auf die folgenden Figuren näher erläutert:
- Figur 1: zeigt ein erstes vereinfachtes Ablaufdiagramm eines Verfahrens zur Übertragung von Telefonbuchdaten von einem Mobiltelefon zu einem externen Gerät;
- Figur 2: zeigt ein zweites vereinfachtes Ablaufdiagramm eines Verfahrens zur Übertragung von Telefonbuchdaten von einem Mobiltelefon zu einem externen Gerät.

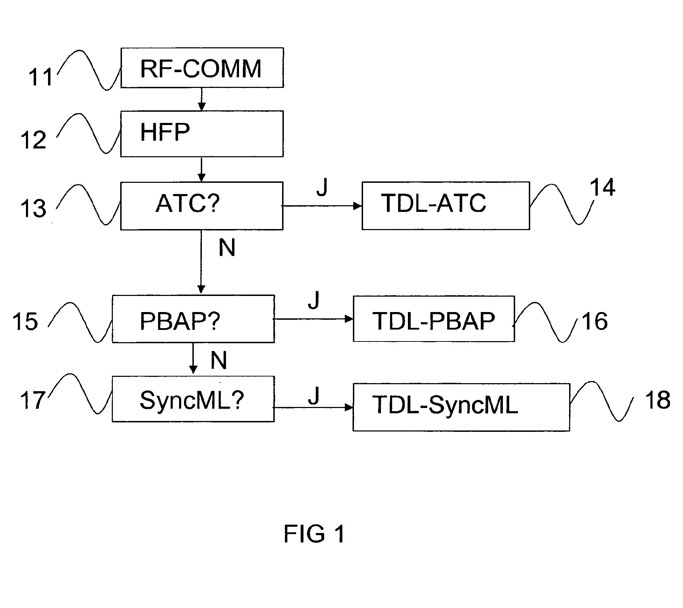

Das anhand Figur 1 erläuterte Ausführungsbeispiel ist von der Erfindung nicht umfasst, sondern dient lediglich dem besseren Verständnis der Erfindung.

In Figur 1 ist der Ablauf eines Telefonbuch-Downloads von einem Mobiltelefon zu einer Kraftfahrzeugfreisprecheinrichtung dargestellt, wobei zunächst ein Telefonbuch-Download basierend auf AT-Kommandos (erste Zugriffsart) versucht wird, und dann, insbesondere bei einem Scheitern des ersten Versuchs, ein Telefonbuch-Download basierend auf dem standardisierten so genannten Phone Book Access Profile PBAP (zweite Zugriffsart) versucht wird.

In einem ersten nicht dargestellten Schritt wird bei eingeschalteter Kraftfahrzeugfreisprecheinrichtung, welche eine Bluetooth-Übertragungseinrichtung und eine Steuereinrichtung umfasst, ein der Kraftfahrzeugfreisprecheinrichtung zugeordnetes Mobiltelefon, welches sich in der Reichweite der Kraftfahrzeugfreisprecheinrichtung befindet, eingeschaltet.

Nach geeigneten Synchronisations- und Identifikationsschritten wird in einem zweiten Schritt 11 automatisch ein Bluetooth-Kommunikationskanal RF-COMM zwischen dem Mobiltelefon und dem externen Gerät aufgebaut.

In einem dritten Schritt 12 wird basierend auf dem Bluetooth-Kommunikationskanal RF-COMM als erster Bluetooth-Dienst ein Bluetooth-Telefoniedienst, das so genannte Bluetooth Hands-Free Profile HFP, eingerichtet.

In einem vierten Schritt 13 wird versucht (ATC?), insbesondere unter Verwendung des Bluetooth-Telefoniedienstes HFP, einen Zugriff auf Telefonbuchdaten basierend auf AT-Kommandos zu initiieren oder zu realisieren. Falls dieser Versuch erfolgreich ist, werden in einem weiteren Schritt 14 von dem Mobiltelefon zu dem externen Gerät Telefonbuchdaten basierend auf AT-Kommandos übertragen (TDL-ATC). Falls dieser Versuch nicht erfolgreich ist, wird in einem weiteren Schritt 15 versucht (PBAP?), basierend auf dem Bluetooth-Kommunikationskanal (RF-COMM) als zweiten Bluetooth-Dienst das Phone Book Access Profile PBAP einzurichten oder zu nutzen. Falls dieser Versuch erfolgreich ist, werden in einem weiteren Schritt 16 von dem Mobiltelefon zu dem externen Gerät Telefonbuchdaten basierend auf dem Phone Book Access Profile PBAP übertragen (TDL-PBAP). Falls dieser Versuch nicht erfolgreich ist, wird in weiteren Schritten 17,18 versucht (SyncML?), basierend auf der so genannten Synchronization Markup Language (SyncML) von dem Mobiltelefon zu dem externen Gerät Telefonbuchdaten zu übertragen (TDL-SyncML).

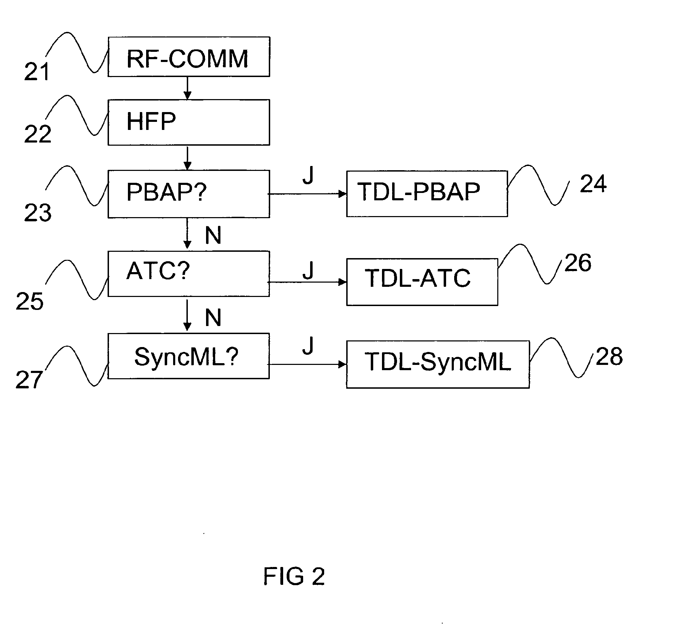

In Figur 2 ist der Ablauf eines Telefonbuch-Downloads von einem Mobiltelefon zu einer Kraftfahrzeugfreisprecheinrichtung dargestellt, wobei zunächst ein Telefonbuch-Download basierend auf dem standardisierten so genannten Phone Book Access Profile PBAP (zweite Zugriffsart) versucht wird, und dann, insbesondere bei einem Scheitern des ersten Versuchs, ein Telefonbuch-Download basierend auf AT-Kommandos (erste Zugriffsart) versucht wird.

In einem ersten nicht dargestellten Schritt wird wieder bei eingeschalteter Kraftfahrzeugfreisprecheinrichtung ein der Kraftfahrzeugfreisprecheinrichtung zugeordnetes Mobiltelefon eingeschaltet.

Nach geeigneten Synchronisations- und Identifikationsschritten wird in einem zweiten Schritt 21 automatisch ein Bluetooth-Kommunikationskanal RF-COMM zwischen dem Mobiltelefon und dem externen Gerät aufgebaut.

In einem dritten Schritt 22 wird basierend auf dem Bluetooth-Kommunikationskanal RF-COMM als erster Bluetooth-Dienst ein Bluetooth-Telefoniedienst, das so genannte Bluetooth Hands-Free Profile HFP, eingerichtet.

In einem vierten Schritt 23 wird versucht (PBAP?), basierend auf dem Bluetooth-Kommunikationskanal (RF-COMM) als zweiten Bluetooth-Dienst das Phone Book Access Profile PBAP einzurichten oder zu nutzen. Falls dieser Versuch erfolgreich ist, werden in einem weiteren Schritt 24 von dem Mobiltelefon zu dem externen Gerät Telefonbuchdaten basierend auf dem Phone Book Access Profile PBAP übertragen (TDL-PBAP). Falls dieser Versuch nicht erfolgreich ist, wird in einem weiteren Schritt 25 versucht (ATC?), insbesondere unter Verwendung des Bluetooth-Telefoniedienstes HFP, einen Zugriff auf Telefonbuchdaten basierend auf AT-Kommandos zu initiieren oder zu realisieren. Falls dieser Versuch erfolgreich ist, werden in einem weiteren Schritt 26 von dem Mobiltelefon zu dem externen Gerät Telefonbuchdaten basierend auf AT-Kommandos übertragen (TDL-ATC). Falls dieser Versuch nicht erfolgreich ist, wird in weiteren Schritten 27,28 versucht (SyncML?), basierend auf der so genannten Synchronization Markup Language (SyncML) von dem Mobiltelefon zu dem externen Gerät Telefonbuchdaten zu übertragen (TDL-SyncML).

## Patentansprüche

1. Verfahren zur Übertragung von Telefonbuchdaten von einem Mobiltelefon zu einem externen Gerät,
- bei dem ein Bluetooth-Kommunikationskanal (RF-COMM) zwischen dem Mobiltelefon und dem externen Gerät aufgebaut wird,
- bei dem basierend auf dem Bluetooth-Kommunikationskanal (RF-COMM) als erster Bluetooth-Dienst ein Bluetooth-Telefoniedienst (HFP) eingerichtet wird, und
- bei dem eine Übertragung von Telefonbuchdaten von dem Mobiltelefon zu dem externen Gerät basierend auf einer von zumindest zwei vorgegebenen Zugriffsarten (PBAP, ATC) initiiert wird,
- bei dem versucht wird, basierend auf dem Bluetooth-Kommunikationskanal (RF-COMM) einen zweiten Bluetooth-Dienst aufzubauen,
- bei dem eine Übertragung von Telefonbuchdaten von dem Mobiltelefon zu dem externen Gerät basierend auf einer zweiten Zugriffsart (PBAP) initiiert wird, wenn der Versuch, basierend auf dem Bluetooth-Kommunikationskanal (RF-COMM) einen zweiten Bluetooth-Dienst aufzubauen, erfolgreich ist, wobei die zweite Zugriffsart (PBAP) den zweiten Bluetooth-Dienst nützt oder bestimmt, und
- bei dem eine Übertragung von Telefonbuchdaten von dem Mobiltelefon zu dem externen Gerät basierend auf einer ersten Zugriffsart (ATC) initiiert wird, wenn eine Übertragung von Telefonbuchdaten von dem Mobiltelefon zu dem externen Gerät basierend auf einer zweiten Zugriffsart (PBAP) nicht erfolgreich ist, wobei die Übertragung von Telefonbuchdaten basierend auf einer ersten Zugriffsart (ATC) von dem Mobiltelefon zu dem externen Gerät auf dem Bluetooth-Telefoniedienst (HFP) basiert.

2. Externes Gerät, insbesondere Kraftfahrzeugfreisprecheinrichtung mit einer Bluetooth-Übertragungseinrichtung, die zum alternativen Zugriff auf Telefonbuchdaten von einem Mobiltelefon auf zumindest zwei verschiedene vorgegebene Zugriffsarten (PBAP, ATC) eingerichtet ist, und
mit einer Steuereinrichtung, die derart eingerichtet ist,
- dass ein Bluetooth-Kommunikationskanal (RF-COMM) zwischen dem Mobiltelefon und dem externen Gerät aufgebaut wird,
- dass basierend auf dem Bluetooth-Kommunikationskanal (RF-COMM) als erster Bluetooth-Dienst ein Bluetooth-Telefoniedienst eingerichtet wird, und
- dass eine Übertragung von Telefonbuchdaten von dem Mobiltelefon zu dem externen Gerät basierend auf einer von zumindest zwei vorgegebenen Zugriffsarten (PBAP, ATC) initiiert wird,
- dass versucht wird, basierend auf dem Bluetooth-Kommunikationskanal (RF-COMM) einen zweiten Bluetooth-Dienst aufzubauen,
- dass eine Übertragung von Telefonbuchdaten von dem Mobiltelefon zu dem externen Gerät basierend auf einer zweiten Zugriffsart (PBAP) initiiert wird, wenn der Versuch, basierend auf dem Bluetooth-Kommunikationskanal (RF-COMM) einen zweiten Bluetooth-Dienst aufzubauen, erfolgreich ist, wobei die zweite Zugriffsart (PBAP) den zweiten Bluetooth-Dienst nützt oder bestimmt, und
- dass eine Übertragung von Telefonbuchdaten von dem Mobiltelefon zu dem externen Gerät basierend auf einer ersten Zugriffsart (ATC) initiiert wird, wenn eine Übertragung von Telefonbuchdaten von dem Mobiltelefon zu dem externen Gerät basierend auf einer zweiten Zugriffsart (PBAP) nicht erfolgreich ist, wobei die Übertragung von Telefonbuchdaten basierend auf einer ersten Zugriffsart (ATC) von dem Mobiltelefon zu dem externen Gerät auf dem Bluetooth-Telefoniedienst (HFP) basiert.

## Claims

1. A method for transmitting telephone book data from a mobile telephone to an external device,
- wherein a Bluetooth communication channel (RF-COMM) is established between the mobile telephone and the external device,
- wherein a Bluetooth telephone service (HFP) is set up based on the Bluetooth communication channel (RF-COMM) as the first Bluetooth service, and
- wherein a transmission of telephone book data from the mobile telephone to the external device is initiated based on one of at least two predetermined access types (PBAP, ATC),
- wherein an attempt is made to establish a second Bluetooth service based on the Bluetooth communication channel (RF-COMM),
- wherein a transmission of telephone book data from the mobile telephone to the external device is initiated based on a second access type (PBAP), when the attempt to establish a second Bluetooth service based on the Bluetooth communication channel (RF-COMM) is successful, wherein the second access type (PBAP) utilises or determines the second Bluetooth service, and
- wherein a transmission of telephone book data from the mobile telephone to the external device is initiated based on a first access type (ATC) when a transmission of telephone book data from the mobile telephone to the external device based on a second access type (PBAP) is not successful, wherein the transmission of telephone book data based on a first access type (ATC) from the mobile telephone to the external device is based on the Bluetooth telephone service (HFP).

2. An external device, more especially motor vehicle hands-free telephone device, with a Bluetooth transmission device, which is set up for alternative access to telephone book data of a mobile telephone in at least two different predetermined access types (PBAP, ATC), and with a control device, which is set up in such a way
- that a Bluetooth communication channel (RF-COMM) is established between the mobile telephone and the external device,
- that a Bluetooth telephone service is set up based on the Bluetooth communication channel (RF-COMM) as a first Bluetooth service, and
- that a transmission of telephone book data from the mobile telephone to the external device is initiated based on one of at least two predetermined access types (PBAP, ATC),
- that an attempt is made to establish a second Bluetooth service, based on the Bluetooth communication channel (RF-COMM),
- that a transmission of telephone book data from the mobile telephone to the external device is initiated based on a second access type (PBAP), when the attempt to establish a second Bluetooth service based on the Bluetooth communication channel (RF-COMM) is successful, wherein the second access type (PBAP) utilises or determines the second Bluetooth service, and
- that a transmission of telephone book data from the mobile telephone to the external device is initiated based on a first access type (ATC) when a transmission of telephone book data from the mobile telephone to the external device based on a second access type (PBAP) is not successful, wherein the transmission of telephone book data based on a first access type (ATC) from the mobile telephone to the external device is based on the Bluetooth telephone service (HFP).

## Revendications

1. Procédé de transfert de données d'annuaire téléphonique d'un téléphone mobile à un appareil externe, selon lequel :
- un canal de communication Bluetooth (RF-COMM) est établi entre le téléphone mobile et l'appareil externe,
- à partir du canal de communication Bluetooth (RF-COMM) en tant que premier service Bluetooth, un service de téléphonie Bluetooth (HFP) est installé,
- un transfert de données d'annuaire téléphonique du téléphone mobile au téléphone externe est amorcé à partir d'un mode de liaison (PBAP, ATC) parmi au moins deux modes de liaison prédéfinis,
- on cherche, à partir du canal de communication Bluetooth (RF-COMM) à établir un second service Bluetooth,
- un transfert de données d'annuaire téléphonique du téléphone mobile vers l'appareil externe est amorcé à partir d'un second mode de liaison (PBAP) lorsque la recherche consistant à établir un second service Bluetooth à partir du canal de communication Bluethooth (RF-COMM) a été effectuée avec succès, le second mode de liaison (PBAP) utilisant ou déterminant le second service Bluetooth, et
- un transfert de données d'annuaire téléphonique du téléphone mobile vers l'appareil externe à partir d'un premier mode de liaison (ATC) est amorcé lorsqu'un transfert de données d'annuaire téléphonique du téléphone mobile vers l'appareil externe à partir d'un second mode de liaison (PBAP) n'a pas été effectué avec succès, le transfert de données d'annuaire téléphonique à partir d'un premier mode de liaison (ATC) du téléphone mobile vers l'appareil externe étant basé sur le service de téléphonie Bluetooth (HFP).

2. Appareil externe en particulier dispositif de téléphone mains libres de véhicule comportant :
- un dispositif de transfert Bluetooth qui est conçu pour permettre un accès alternatif à des données d'annuaire téléphonique à partir d'un téléphone mobile par au moins un mode de liaison différent prédéfini (PBAP, ATC), et un dispositif de commande conçu de sorte que :
- un canal de communication Bluetooth (RF-COMM) soit établi entre le téléphone mobile et l'appareil externe,
- à partir du canal de communication Bluetooth (RF-COMM), un service de téléphonie Bluetooth soit installé en tant que premier service Bluetooth,
- un transfert de données d'annuaire téléphonique du téléphone mobile vers l'appareil externe soit amorcé à partir d'un mode de liaison (PBAP, ATC) parmi au moins deux modes de liaison prédéfinis,
- on cherche, à partir du canal de communication Bluetooth (RF-COMM) à établir un second service Bluetooth,
- un transfert de données d'annuaire téléphonique du téléphone mobile à l'appareil externe soit amorcé à partir d'un second mode de liaison (PBAP) lorsque la recherche consistant à établir un second service Bluetooth à partir du canal de communication Bluethooth (RF-COMM) effectuée avec succès, le second mode de liaison (PBAP) utilisant ou déterminant le second service Bluetooth,
- un transfert de données d'annuaire téléphonique du téléphone mobile vers l'appareil externe à partir d'un premier mode de liaison (ATC) est amorcé lorsqu'un transfert de données d'annuaire téléphonique du téléphone mobile vers l'appareil externe à partir du second mode de liaison (PBAP) n'a pas été effectué avec succès, le transfert de données d'annuaire téléphonique à partir d'un premier mode de liaison (ATC) du téléphone mobile vers l'appareil externe étant basé sur le service de téléphonie Bluetooth (HFP).
